# EUROPEAN PATENT APPLICATION

(11) **EP 2 128 419 A1**
(43) Date of publication of application: **02.12.2009**
(21) Application number: 09251197.1
(22) Date of filing: 28.04.2009
(51) Int. Cl.: F02K 3/06

(54) **Three-spool gas turbine engine**

(30) Priority: 30.05.2008 GB 0809759
(71) Applicant: Rolls-Royce plc, 65 Buckingham Gate London SW1E 6AT (GB)
(72) Inventor: Knight, Glenn Alexander, Belper Derby DE56 4GX (GB); Richards, Martyn, Stretton Burton on Trent DE13 0YJ (GB); Taylor, Mark David, Ashbourne Derbyshire DE6 2EL (GB); Maguire, Alan Robert, Findern Derby DE65 6AN (GB)
(74) Representative: Gunn, Michael Alan

(57) **Abstract**

A gas turbine engine (10, 60, 80) comprising three shafts (24, 25, 26) connecting respective high, intermediate and low pressure turbines (17, 68, 19) and compressors (13, 14, 15) is characterised by an intermediate pressure turbine (14) comprising two rotor stages (70, 72).

## Description

The present invention relates to a three-shaft gas turbine engine arrangement and in particular an arrangement of an intermediate turbine thereof.

Conventional three-shaft gas turbine engines comprise high, intermediate and low pressure spools. These engines are provided with a single rotating stage in both the high and intermediate turbines. The low pressure turbine however, usually comprises many stages.

The potential overall pressure ratio of a gas turbine has increased with more temperature capable material, particularly in the uncooled high-pressure compressor. On three-shaft engines this has meant increasing the work on each of the high pressure and intermediate pressure (or core) turbines to raise pressure ratio and hence raise thermal efficiency. In parallel, low pressure compressor (fan) and nacelle (weight and size) technologies have also developed to allow the bypass ratio to increase for higher propulsive efficiency. The combination of increased pressure ratio and resultant reduced core flow has given rise to a very high specific work requirement for the core turbines. This high level of work reduces the component efficiency of the core turbines, effectively reducing the benefits of a fundamentally more efficient cycle.

The problem of achieving high core pressure ratio also applies to two-shaft engines where higher pressure ratios are predominantly achieved through increased work on the single core high pressure shaft. On a two-shaft engine it is necessary to load up the high pressure core shaft to its maximum to avoid making up pressure ratio on the relatively inefficient, low speed booster that is connected to the low pressure shaft. However, the maximum pressure ratio of a single core shaft is fundamentally limited due to the increased threat of compressor flow instability at very high pressure ratios.

Advanced three-dimensional computational fluid dynamics and increased strength materials allowing for higher turbine blade speed have largely mitigated the potential component efficiency loss. However, it is apparent that a fundamental architecture shift in core engine technology is required to allow further cycle efficiency gains.

Therefore it is an object of the present invention to provide a new core turbine design which obviates the above mentioned problems.

In accordance with the present invention a gas turbine engine comprising three shafts connecting high, intermediate and low pressure turbines to high and intermediate compressors and fan respectively is characterised by an intermediate pressure turbine comprising two rotor stages that drives the intermediate pressure compressor.

Preferably, the high pressure turbine comprises one, but may comprise two rotor stages.

Advantageously, the low pressure turbine comprises between one and ten rotor stages. Preferably, the low pressure turbine comprises between five and nine rotor stages.

Advantageously, the specific work of the first stage of the intermediate pressure turbine is between 0.0129 and 0.0431 KJ/kg/K. Preferably, the specific work of the first stage of the intermediate pressure turbine is typically between 0.02 CHU/lb/K and 0.035 CHU/lb/K.

Advantageously, the specific work on the second stage of the intermediate pressure turbine is between 0.0129 and 0.0431 KJ/kg/K. Preferably, the specific work of the second stage of the intermediate pressure turbine is typically between 0.0172 and 0.0302 KJ/kg/K.

Preferably, the combined specific work of both the first and second stages of the intermediate pressure turbine is between 0.0259 and 0.0862 KJ/kg/K.

Advantageously, the combination of intermediate shaft rotational speed and blade tip radius gives a mean blade speed between 305 and 427 m/s on the first stage. Preferably, the combination of intermediate shaft rotational speed and blade tip radius gives a mean blade speed between 366 and 388 m/s on the second stage.

Advantageously, the engine may comprise an intercooler in flow sequence between an intermediate pressure compressor and a high pressure compressor.

The present invention will be more fully described by way of example with reference to the accompanying drawings in which:
Figure 1 is a schematic section of a prior art three-shaft ducted fan gas turbine engine;
Figure 2 is a schematic section of a prior art two-shaft ducted fan gas turbine engine;
Figure 3 is an enlarged schematic section of the turbines of a three-shaft gas turbine engine in accordance with the present invention;
Figure 4 is a schematic section of a three-shaft gas turbine engine comprising an intercooler and is in accordance with the present invention.

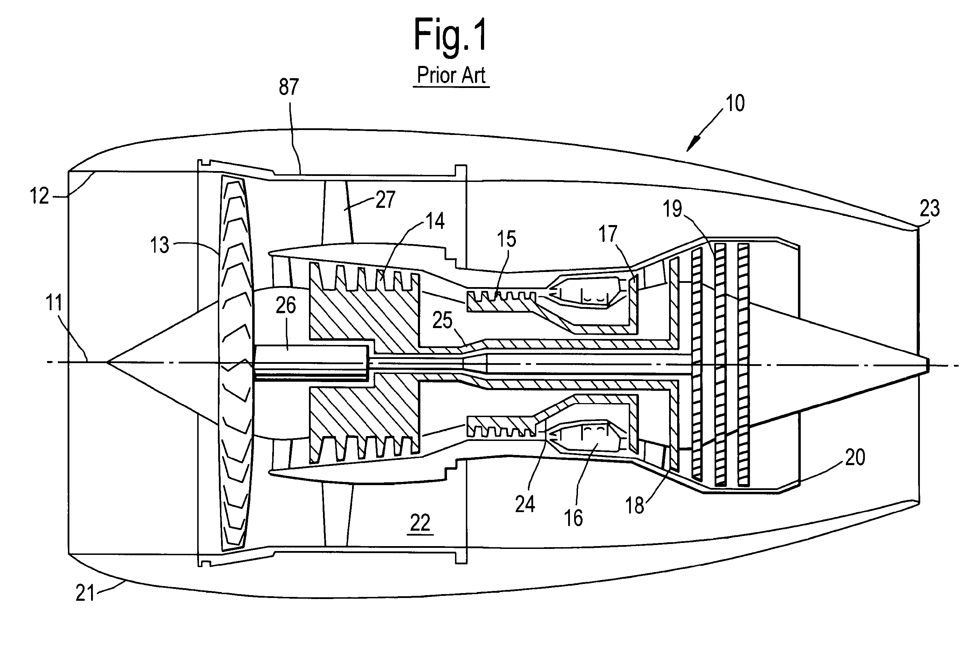

With reference to Figure 1, a ducted fan gas turbine engine generally indicated at 10 has a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and a core engine exhaust nozzle 20. A nacelle 21 generally surrounds the engine 10 and defines the intake 12, a bypass duct 22 and a bypass exhaust nozzle 23. The fan 13 is circumferentially surrounded by a fan casing 26, which is supported by an annular array of outlet guide vanes 27.

The gas turbine engine 10 works in a conventional manner so that air entering the intake 11 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place. The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high, intermediate and low-pressure turbines 17, 18, 19 respectively drive the high and intermediate pressure compressors 15, 14 and the fan 13 by interconnecting shafts 24, 25, 26 respectively thereby making up high, intermediate and low-pressure spools.

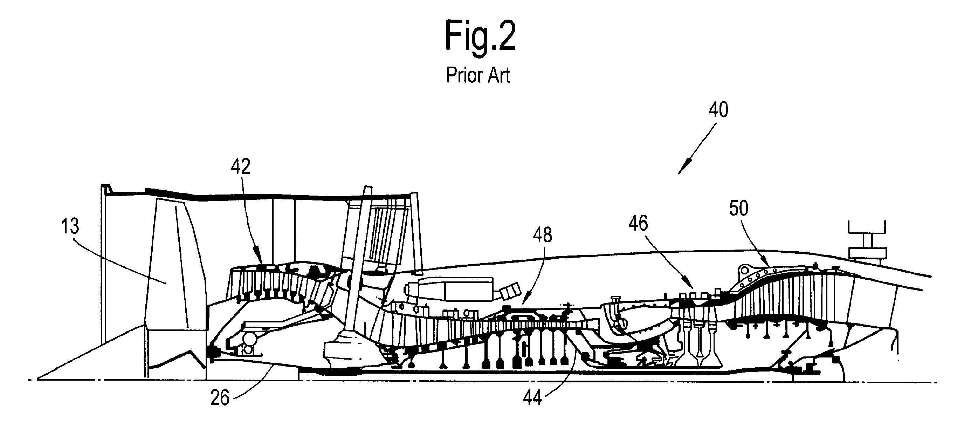

Referring to Figure 2 where like components are given the same reference numerals as in Figure 1; a two shaft gas turbine engine 40 differs from the three shaft engine described above by virtue of the absence of the intermediate compressor/turbine spool 14/18/25 in Figure 1. The two-shaft engine 40 instead employs a fan booster assembly 42 which is connected to the low pressure shaft 26. The high pressure spool 44 is driven by a two-stage turbine 46 (i.e. two rotating stages, with complimentary stator stages).

Generally, gas turbine engines need to operate at a high pressure ratio (through the engine) for high efficiency. In the case of two-shaft engines, the pressure ratio is provided by the fan 13 and booster 42 driven from the low pressure shaft 26 and a core or high-pressure shaft compressor 48. The core compressor 48 is typically driven by a single or as shown a two-stage high pressure turbine 46. Two rotor stages are usually employed where a very high pressure ratio is required on the core compressor 48 to avoid increased levels of compression on what is the relatively inefficient booster.

Although desirable, a low pressure booster is relatively inefficient because its blade speed is limited to that of the low pressure spool. The rotational speed of the low pressure spool is controlled by ensuring the tip speed of the large diameter fan remains at a sufficiently low speed to avoid excessive noise and aerodynamic shock loss. The engine's fan and bypass duct dimensions are the primary design features and therefore the diameter of the booster is substantially less than the fan and is therefore running at much lower blade speeds. This low blade speed limits the pressure ratio gain per stage in order to maintain acceptable aerodynamic loading. There are fundamental limits to aerodynamic loading on a compressor stage due to the need to avoid stalling in addition to the loss of efficiency. The resultant limits on pressure ratio gain per stage of the booster means that several stages are required to achieve relatively modest overall pressure ratios.

The fan 13 and booster 42 system is driven by a multiple stage low pressure turbine 50, in this case a five-rotor stage low pressure turbine. Typically, multiple rotor stages are required on the low pressure turbine 50 because its rotational speed is limited by speed of the fan's tip and aerodynamic considerations to maintain fan efficiency and limit noise generation. This relatively low speed effectively produces high aerodynamic loading on the turbine stages at a level of work which implies high Mach Numbers and steep turning angles in the blades and consequently they are inefficiency. High aerodynamic loading is typically addressed by increasing the number of stages to achieve the total work required.

In the case of the three-shaft engine 10 the pressure ratio is supplied by the fan 13 on the low pressure shaft 24, the intermediate compressor 14 on the intermediate pressure shaft 25 and the high pressure core compressor 15 on the high pressure shaft 24. In conventional three-shaft engines the intermediate and high pressure compressors 14, 15 are only ever driven by a single rotating stage turbine 17, 18. Because the combined core work required to deliver the core pressure ratio is split between the two shafts 24, 25, the work on each core turbine is maintained at a level which allows high efficiency with single rotating stage turbines. Therefore for a three-shaft engine there has never been contemplated a multiple high or intermediate turbine 17, 18. The situation which results in multiple stages on the low pressure turbine 19 driving the fan low pressure system 13 is a similar argument to that on the two-shaft engine 40.

Development of new materials and cooling technology to increase the engine components' ability to tolerate ever higher temperatures has been exploited to improve efficiency by increasing overall pressure ratio. For two shaft engines the overall pressure ratio is typically limited by the stability of the high pressure core compressor 48 and the size of the relatively slow and inefficient booster 42. However, on three shaft engines, there is sufficient pressure ratio capability in the combined intermediate and high pressure core compressors 14, 15 to deliver substantially higher than typical overall pressure ratios. Unfortunately, on conventional three shaft engines, the pressure ratio is limited by the increased level of work on a conventional single stage turbine 17, 18. Therefore, the pressure ratio either has to be limited or a level of inefficiency has to be accepted in the single stage core turbines 17, 18 or a relatively heavy and inefficient booster has to be added to the low pressure fan shaft as on two-shaft engines.

This situation is also exacerbated by the trend for large diameter, slow rotational, low pressure ratio fans for noise and propulsive efficiency which have the combined undesirable effect of lower shaft speed and reducing pressure rise available from the root (radially inner part) of the fan 13. Furthermore, these increasingly efficient engine cycles with higher bypass ratios have less mass flow of working gas through the turbines that in turn increases the turbine aerodynamic loads and level of specific work thus reducing efficiency even further. An increase in bypass ratio implies relatively lower core mass flow; and turbine work is the product of mass flow multiplied by enthalpy change. Therefore if the mass flow reduces, then the enthalpy must increase for a given amount of work, which translates in to a higher aerodynamic loading with increased turning of the gas flow in the blade passage and higher Mach Numbers.

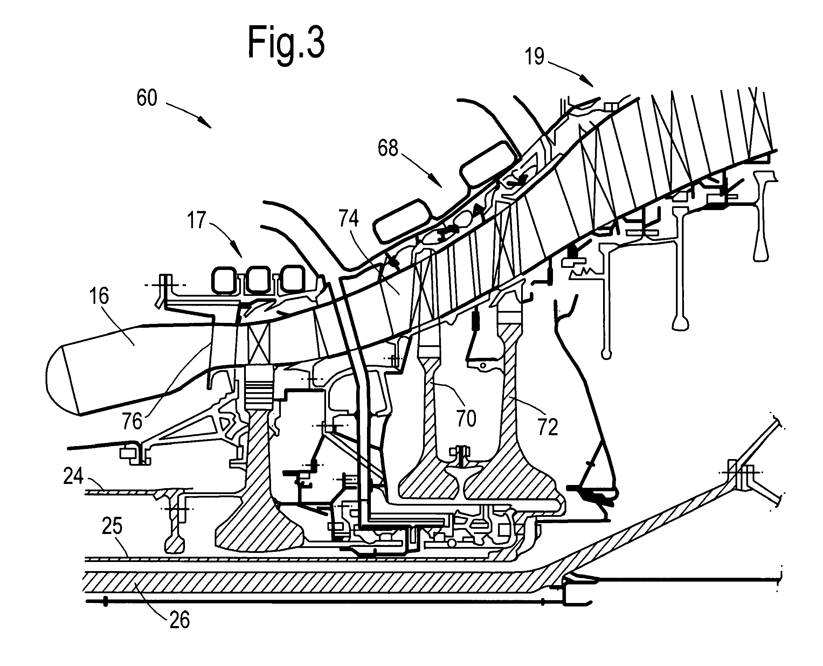

The present invention will now be described with reference to Figure 3, which is an exemplary embodiment of a two-stage intermediate turbine 68 of a three shaft gas turbine engine 60. Except where mentioned, the engine configuration of the present invention is the same as the three-shaft gas turbine engine 10 described with reference to Figure 1. This invention extends the pressure ratio capability of a three-shaft engine by enabling full exploitation of the three-shaft compression system (13, 14, 15). This engine 60 comprises an intermediate pressure spool with a novel two-rotor stage turbine 68 arrangement. The two stages 70, 72 are connected together and act as one turbine module and are mounted on bearing arrangements typical of three-shaft engines.

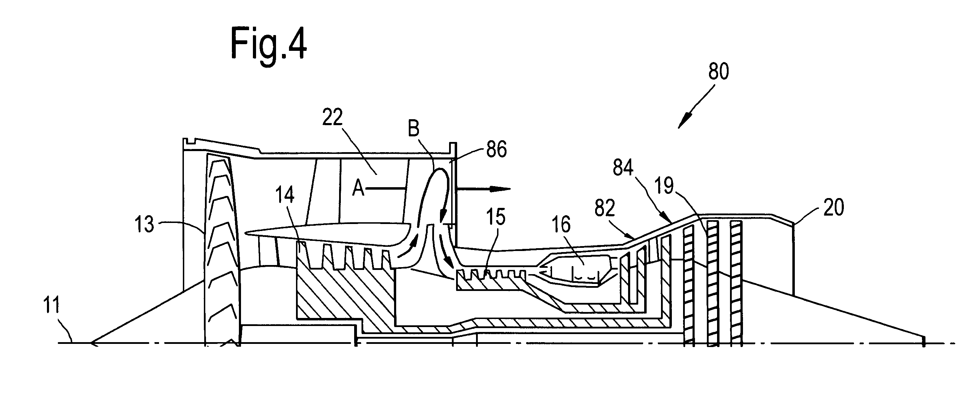

The radial positions of the two annular arrays of intermediate turbine blades 70, 72 is set to achieve high aerodynamic efficiency combined with high levels of intermediate pressure turbine 68 overall work within optimised parameters of rotational speed and provision of a smooth transition in the gas path between the high and low pressure turbines 17 and 19. This novel intermediate turbine arrangement 68 is axially longer than a single stage and therefore effectively allows a smoother transition and a shallower radial angle between the high-pressure turbine's inlet 74 (Figure 3) and the core nozzle 20 (Figure 4) without a radially steep, highly curved duct 74. Typically, the radial angle is reduced by 5 - 10 degrees. This also promotes increased aerodynamic efficiency by simplifying flow control through the intermediate turbine and inter-turbine ducts. The flow control, e.g. blade and vane shapes, is simplified through the less steep, reduced radial curvature turbine duct 74 because the gas flow behaves more uniformly and there is reduced 'three-dimensional' flow thus reducing the need for complicated orthogonal blade shapes.

A further advantage of the present invention is instead of a shallower radial angle of the new intermediate pressure turbine, a shallower radial angle through the high pressure turbine 17 may be used. This will reduce the amount of parasitic mass in the high pressure turbine blade root, thus reducing the mechanical duty on the high pressure turbine disc.

The novel two-stage intermediate turbine 68 increases both the overall pressure ratio capability and gives the possibility to optimise the work between the two core spools 24, 25 of a three-shaft engine. The turbine 68 is arranged such that work is distributed to maximise overall efficiency by lowering the work per rotor stage 70, 72 and reducing the aerodynamic loading. The levels of loading per rotor stage 70, 72 also allow for the intermediate spool speed to be lowered to reduce mechanical duty and hence weight. It also provides increased design space for intermediate shaft speed optimisation on compressor and turbine efficiencies and weights to improve overall engine cycle benefit. The work distribution between high and intermediate spools is optimised around peak efficiencies on each spool and change points on turbine component cooling requirements. The work distribution between the two stages 70, 72 of the intermediate turbine 68 is ideally set up to avoid having to provide extensive and parasitic cooling on the second stage 72, although cooling could be justified for advanced and very high pressure ratio engine cycles with particularly high turbine temperatures.

Although shown with one rotor stage of the high pressure turbine, it may comprise two rotor stages and it is typical that the low pressure turbine comprises between one and ten rotor stages, but more normally between five and nine stages.

Yet a further advantage of the present invention is because the work capability of the intermediate two stage turbine 68 provides for very high levels of external power off-take from the intermediate spool without any detrimental compressor handling effects at low power settings. Without the present invention, high levels of power off-take would require thermodynamically inefficient bleed systems to maintain compressor stability. The level of power extraction is a function of the aircraft requirement which is likely to increase with the use of more electric based aircraft systems.

Describing now an alternative embodiment of the present invention with reference to Figure 4, a three-shaft gas turbine engine 80 comprises both its intermediate and high pressure turbines 82, 84 each having two rotor stages and an intercooler 86 in flow sequence between the intermediate and high pressure compressors 14, 15. The bypass airflow A is ducted to provide a coolant for the intercooler 86 while the core gas flow B is channelled from the downstream exit of the intermediate compressor 14, through the intercooler 86 and into the high-pressure compressor 15. This intercooler arrangement allows a very high overall pressure ratio of between 1:60 and 1:80 to be achieved yet with a relatively low high pressure compressor exit temperature thus avoiding material capability limitations. The intercooler effectively reduces the inlet temperature to the downstream high pressure compressor thus allowing more pressure rise within a given final compression outlet temperature. To achieve the high pressure ratio associated with an intercooled cycle, considerable work potential is needed in the core turbines; at least 50% greater than that required for a conventional cycle. A three-shaft engine with a two-rotor stage intermediate pressure turbine provides the core work potential necessary for an effective intercooled cycle. The turbine work potential is increased further if the two-rotor stage intermediate pressure turbine is used in conjunction with a two-stage high pressure turbine.

For a gas turbine engine comprising three shafts and an intermediate pressure turbine comprising two rotor stages 70, 72 in accordance with the present invention, it may be further characterised by the specific work each rotor stage 70, 72 achieves. 'Specific work' (KJ/kg/K or CHU/lb/K) is defined as the change in enthalpy/Inlet temperature across a particular rotor stage. For the present invention the specific work across the first stage 70 of the intermediate turbine is between 0.0129 and 0.0431 KJ/kg/K (0.015 and 0.05 CHU/lb/K) and across the second stage 72 between 0.0129 and 0.0431 KJ/kg/K (0.015 and 0.05 CHU/lb/K). It is believed that the preferred ranges of specific work are between 0.0172 and 0.0302 KJ/kg/K (0.02 and 0.035 CHU/lb/K) for the first and second stages 70, 72. Overall therefore the preferable range of combined specific work across the intermediate turbine is between 0.0259 and 0.0862 KJ/kg/K (0.03 and 0.1 CHU/lb/K).

The present invention may also be further characterised by the combination of intermediate shaft 25 rotational speed and turbine blade tip radius to give a mean blade speed (mid chord speed) between 305 and 427 m/s (1000 and 1400 ft/sec) on the first stage 70 and a mean blade speed between 366 and 388 m/s (1200 and 1600 ft/sec) on the second stage.

This new intermediate turbine with two-stages increases both the overall pressure ratio capability and the scope for optimising the work between the two core spools of the three-shaft engine to maximise efficiency and minimise cooling. The addition of a further stage of core turbine 17 reduces the specific work per stage providing a fundamental increase in turbine efficiency. Because of reduced work per stage 70, 72 the need for very high turbine blade speed is also reduced enabling the intermediate shaft rotational speed to be reduced to maximise intermediate compressor 14 efficiency and adjust the radial position of the turbine blades to smooth the turbine annulus. This ability to reduce the radial angle of the turbine annulus has the added benefit of reducing the angle of the annulus through the high pressure turbine 19 hub reducing the parasitic mass of the blade root, thus reducing the disc's rim load and mechanical duty on the high pressure turbine disc.

The intermediate turbine stages 70, 72 are joined via a high integrity joint, to ensure they act as a single rotor should the compressor drive shaft 25 fail. Compared with a single stage intermediate turbine of the prior art, the higher combined inertia of the two stages 70, 72 in conjunction with an optimised lower rotational speed advantageously reduces the terminal design speed in event of loss of load from compressor shaft failure. Overall this results in a light compact two-stage design relative to the large disc of a single stage.

## Claims

1. A gas turbine engine (10, 60, 80) comprising three shafts (24, 25, 26) connecting high, intermediate and low pressure turbines (17, 68, 19) to high and intermediate compressors (15, 14) and fan (15) respectively is **characterised by** an intermediate pressure turbine (68) comprising two rotor stages (70, 72) that drives the intermediate pressure compressor (14).

2. A gas turbine engine as claimed in claim 1 wherein the high pressure turbine (17) comprises one or two rotor stages.

3. A gas turbine engine as claimed in any one of claims 1-2 wherein the low pressure turbine (19) comprises between one and ten rotor stages.

4. A gas turbine engine as claimed in claim 3 wherein the low pressure turbine (19) comprises between five and nine rotor stages.

5. A gas turbine engine as claimed in any one of claims 1-4 wherein the specific work of the first stage (70) of the intermediate pressure turbine (68) is between 0.0129 and 0.0431 KJ/kg/K.

6. A gas turbine engine as claimed in claim 5 wherein the specific work of the first stage of the intermediate pressure turbine (68) is typically between 0.02 CHU/lb/K and 0.035 CHU/lb/K.

7. A gas turbine engine as claimed in any one of claims 1-6 wherein the specific work on the second stage of the intermediate pressure turbine (68) is between 0.0129 and 0.0431 KJ/kg/K.

8. A gas turbine engine as claimed in claim 7 wherein the specific work of the second stage (72) of the intermediate pressure turbine (68) is typically between 0.0172 and 0.0302 KJ/kg/K.

9. A gas turbine engine as claimed in any one of claims 1-8 wherein the combined specific work of both the first and second stages (70, 72) of the intermediate pressure turbine (68) is between 0.0259 and 0.0862 KJ/kg/K.

10. A gas turbine engine as claimed in any one of claims 1-9 wherein the combination of intermediate shaft rotational speed and blade tip radius gives a mean blade speed between 305 and 427 m/s on the first stage (70).

11. A gas turbine engine as claimed in any one of claims 1-10 wherein the combination of intermediate shaft rotational speed and blade tip radius gives a mean blade speed between 366 and 388 m/s on the second stage (72).

12. A gas turbine engine as claimed in any one of claims 1-11 wherein the engine comprises an intercooler (86) in flow sequence between an intermediate pressure compressor (14) and a high pressure compressor (15).
